# EUROPÄISCHE PATENTANMELDUNG

(11) **EP 3 442 194 A1**
(43) Veröffentlichungstag der Anmeldung: **13.02.2019**
(21) Anmeldenummer: 17185672.7
(22) Anmeldetag: 10.08.2017
(51) Int. Cl.: H04L 29/06, G06F 21/62

(54) **TECHNISCHES SYSTEM UND VERFAHREN ZUM SCHUTZ PERSONENBEZOGENER DATEN**

(71) Anmelder: Siemens Healthcare GmbH, 91052 Erlangen (DE)
(72) Erfinder: Weber, Ricarda, 85716 Unterschleissheim (DE)

(57) **Zusammenfassung**

Das technische System ist ausgebildet zum Schutz personenbezogener Daten und weist eine oder mehrere Datenquellen (DQ) auf, welche zur Nutzung personenbezogener Daten mindestens eines Datensubjekts (DS) ausgebildet sind, wobei eine Widerrufsdatenbank (WIDE) bereitgehalten ist, welche eine oder mehrere Widerruf/e zu einem oder mehreren Einverständniserklärungen (ERKE) des mindestens einen Datensubjekts (DS) bereithält.

Das Verfahren zum Betrieb von Datenquellen (DQ) ist ausgebildet zum Schutz personenbezogener Daten und es werden bei dem Verfahren die Datenquellen (DQ) als Teil eines technischen Systems wie oben beschrieben betrieben.

Geeigneterweise sind bei dem technischen System und dem Verfahren die Widerrufsdatenbank (WIDE) mittels der analogen Nutzung eines PKI-Protokolls, insbesondere mittels des CRL-Protokolls und/oder des OCSP-Protokolls, und/oder die Einverständnisdatenbank (EINV) mittels analoger Nutzung eines PKI-Protokolls, insbesondere des X.509-Protokolls, und/oder die Zugriffskontrollregel-Datenbank mittels des XACML-Protokolls realisiert.

## Beschreibung

Die Erfindung betrifft ein technisches System und ein Verfahren zum Schutz personenbezogener Daten.

Zunehmend erfassen technische Systeme, beispielsweise Infrastrukturlösungen wie insbesondere Smart-Home-Steuerungen, persönliche Daten von Nutzern. Der Schutz solcher persönlichen Daten unterliegt zum einen gesetzlichen Bestimmungen. Zum anderen ist der Schutz persönlicher Daten essentiell für die Nutzerakzeptanz solcher technischen Systeme.

Im Bereich des Datenschutzes sind dabei nachfolgende Grundsätze und (zumindest für Lösungen, welche auch in Europa einsetzbar sein sollen) gesetzlichen Bestimmungen zu berücksichtigen:
Ein/e "Datenverantwortliche/r" ermittelt den Zweck und die Mittel der Verarbeitung persönlicher Daten. Er/Sie ist verantwortlich für den Datenschutz und muss den Datensubjekten jeweils Gelegenheit geben, ihre Rechte, wie insbesondere den Widerruf eines Einverständnisses zur Datennutzung, auszuüben. Das Datensubjekt ist diejenige menschliche Person, deren Daten erfasst, gespeichert und verarbeitet werden sollen.

Kurz "Einverständnis" bezeichnet in der nachfolgenden Beschreibung vorzugsweise ein freies und eindeutiges, spezifisches und wohlinformiertes Einverständnis eines Datensubjekts damit, dass seine personenbezogenen Daten verarbeitet werden. Dieses Einverständnis ist zudem eine der nach einer EU-Datenschutzrichtlinie vorgesehenen Bedingungen, die die Nutzung personenbezogener Daten rechtfertigen.

Das Einverständnis ist lediglich für die konkrete Nutzung heranziehbar, für welche das Einverständnis erfasst worden ist.

Nach europäischen Grundsätzen ist das Einverständnis vor der Datenerfassung ausdrücklich abzugeben; das Einverständnis ist also als Einwilligung zu verstehen. Die Abgabe ist dazu gut zu dokumentieren und ist widerruflich auszugestalten. Der Zweck ist der konkrete Anlass, zu welchem die personenbezogenen Daten erhoben und verarbeitet werden. Personenbezogene Daten können nur für einen konkreten, ausdrücklich genannten Zweck gesammelt werden, für welche das Datensubjekt sein Einverständnis gegeben hat. Dienstanbieter (Datenverantwortliche/r) und datenverarbeitende Parteien (Datenverarbeiter), welche für den Dienstanbieter tätig sind, müssen das Datensubjekt dazu deutlich und rechtskonform über den Zweck der Datenerhebung und -Verarbeitung unterrichten.

Als "personenbezogene Daten" werden solche Daten bezeichnet, die sich auf ein Individuum beziehen, das entweder direkt anhand dieser Daten oder in Verknüpfung mit anderen potentiell für den Datenverantwortlichen verfügbaren Daten identifiziert werden kann. Dabei ist eine Zuordbarkeit eines Namens keine eigens erforderliche Voraussetzung.

Im Bereich des Internets der Dinge (nachfolgend kurz "IoT") sammeln Sensoren häufig nicht direkt personenbezogene Daten. Datenschützer sowie eine Artikel-29-Datenschutzgruppe empfehlen jedoch jeweils, alle Sensordaten des Internets der Dinge als personenbezogene Daten anzusehen, welche beispielsweise den physischen Aufenthalt, den Energieverbrauch, die räumlichen Umgebungsbedingungen, etc. umfassen können und/oder die Rückschlüsse auf das individuelle Verhalten und/oder die Gefühlseindrücke der Personen, die zu den erfassten oder gemessenen oder verarbeiteten Daten beigetragen haben, zulassen.

Daten- und Sensor-Verknüpfung können eine in die Privatsphäre eingreifende Profilerstellung ermöglichen, sodass eine ständige Überwachung in der Öffentlichkeit und zu Hause resultieren kann, was nicht mit der Menschenwürde vereinbar ist. Die EU-Artikel-29-Datenschutzgruppe empfiehlt eine angemessene Nutzerkontrolle ihrer personenbezogenen Daten, einschließlich der Möglichkeit zum Widerruf eines gegebenen Einverständnisses.

Das Datensubjekt soll sein Einverständnis mit Wirkung für die Zukunft jederzeit widerrufen können. Insbesondere im Umfeld des Internets der Dinge, in welchem Sensoren kontinuierlich (potentiell) personenbezogene Daten erfassen, muss der/die Datenverantwortliche stets gewährleisten, dass aktuell noch immer ein gültiges Einverständnis besteht.

Dies bedeutet, dass eine Zugangskontrolle jeweils prüft, ob noch immer eine gültige und nicht widerrufenes Einverständnis zur Datennutzung besteht (s. z.B. Internet-der-Dinge-Architekturvorschläge in den EU-Projekten IOT-A und RERUM).

Insbesondere im Bereich des Internets der Dinge sind von einem gegebenen Einverständnis und dessen Änderung oder Widerruf regelmäßig mehrere Datenquellen und Datenverarbeiter betroffen. Solche Datenquellen oder Datenverarbeiter können zudem dynamisch einem System beitreten oder dieses verlassen.

Beispielsweise sind mehrere Datenquellen, etwa datenerfassende Sensoren, vorhanden, wobei mehrere dieser Datenquellen von einem widerrufenen Einverständnis eines Datensubjekts betroffen sein können, sodass die Datenquellen die Erhebung oder Erfassung oder Verarbeitung oder Übermittlung (kurz: "Nutzung") von Daten einstellen müssen.

Es ist daher Aufgabe der Erfindung, ein verbessertes technisches System mit einer oder mehreren Datenquellen anzugeben, welches zur Nutzung personenbezogener Daten geeignet ist und insbesondere datenschutzkonform ausbildbar ist. Ferner ist es Aufgabe der Erfindung, ein verbessertes Verfahren anzugeben, welches zur Nutzung personenbezogener Daten geeignet ist und insbesondere datenschutzkonform umsetzbar ist.

Diese Aufgabe der Erfindung wird mit einem technischen System mit den in Anspruch 1 angegebenen Merkmalen sowie mit einem Verfahren mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße technische System ist zum Schutz personenbezogener Daten ausgebildet. Das technische System gemäß der Erfindung weist eine oder mehrere Datenquellen auf, welche zur Nutzung personenbezogener Daten mindestens eines Datensubjekts ausgebildet sind. Die Datensubjekte sind dabei Personen, vorzugsweise natürliche Personen. Bei dem technischen System ist eine Widerrufsdatenbank bereitgehalten, welche eine oder mehrere Widerruf/e zu einem oder mehreren Einverständniserklärungen des mindestens einen Datensubjekts bereithält. Es versteht sich, dass die Widerrufsdatenbank Teil des technischen Systems ist.

Grundsätzlich ist das technische System derart eingerichtet, dass das Datensubjekt seine Einverständniserklärung auf verschiedene Weisen widerrufen kann, insbesondere explizit mittels persönlicher und/oder schriftlicher und/oder fernmündlicher und/oder internetbasierter Mitteilung an den Betreiber. Ferner kann das Datensubjekt seine Einverständniserklärung auch implizit widerrufen, etwa mittels Abmeldung im technischen System des Betreibers und/oder mittels Löschens eines zugeordneten Kontos und/oder durch Stilllegen eines solchen Kontos und/oder durch Deinstallation einer Anwendung ("*App*") des Betreibers auf einem Endgerät des Datensubjekts, wenn mit dem Betreiber eine solche Verhaltensweise als Widerruf vereinbart ist. Danach kann der Betreiber weitere Datenquellen von der Nutzung weiterer personenbezogener Daten des Datensubjekts ausschließen.

Bei dem erfindungsgemäßen technischen System werden Widerrufe der Einverständniserklärungen auf eine leicht standardisierbare und skalierbare Weise veröffentlicht. Eine einfache Abfrage des Status einer Einverständniserklärung durch die Datenquellen und ggf. weitere datenverarbeitende Komponenten ist jederzeit leicht möglich. Die Widerrufe von Einverständnissen lassen sich in einer einheitlichen und standardisierten oder standardisierbaren Weise an die Datenquellen des technischen Systems weiterleiten, indem die Informationen über den Widerruf aus einer Widerrufsdatenbank an die Datenquelle/n übermittelt werden. Insbesondere lässt sich leicht gewährleisten, dass eine bestimmte Datenquelle, etwa ein bestimmter IoT-Sensor, erfährt, dass ein Einverständnis widerrufen wurde, etwa durch wiederholte Abfragen der Datenquelle an die Widerrufsdatenbank. Folglich kann die Datenquelle dafür sorgen, dass die Datenquelle keine Daten erhebt oder sonst nutzt, im Falle eines Sensors insbesondere ggf. vorhandene Anzeigen des Sensors inaktiviert oder geschwärzt werden, wenn sich diese Daten auf ein solches Datensubjekt beziehen, welches sein Einverständnis widerrufen hat. Auf diese Weise ist sichergestellt, dass Datenquellen des technischen Systems im Einklang mit Datenschutzbestimmungen stehen und keine personenbezogenen Daten erheben oder weitergeben, wenn das erforderliche Einverständnis zurückgezogen worden ist.

Insbesondere kann die erfindungsgemäße Lösung einheitlich und standardisiert eingesetzt werden. Die zugrundeliegende Aufgabe wird bisher noch nicht automatisiert oder gar standardisiert oder überhaupt einheitlich gelöst. Im Normalfall erteilt das Datensubjekt sein Einverständnis durch Bestätigen/Anklicken der Datenschutzerklärung oder auch durch Unterschrift unter die Datenschutzerklärung in Papierform. Oftmals wird das Einverständnis des Datensubjekts einfach implizit unterstellt durch Inbetriebnahme und Inbetriebhaltung eines Gerätes oder einer Anwendung oder Aufenthalt im Einzugsbereich desselben. Danach werden dann die vom Betreiber spezifizierten Daten erhoben und verarbeitet. Eine Zugriffskontrolle erfolgt üblicherweise proprietär gemäß dem Verbots- oder dem Erlaubnisprinzip im System des Betreibers. Erfindungsgemäß hingegen kann die Widerrufsdatenbank in einer standardisierten Weise bereitgehalten werden, sodass ein technisches System leicht erweiterbar und skalierbar ist. Vorzugsweise ist die Widerrufsdatenbank automatisiert, insbesondere computerimplementiert. Vorzugsweise ist oder sind die Datenquelle/n zur automatisierten Abfrage der Widerrufsdatenbank ausgebildet.

In einer grundlegenden Weiterbildung der Erfindung hinterlegt der Betreiber eine vom Datensubjekt abgegebene Einverständniserklärung direkt bei der zumindest einen Datenquelle/den davon betroffenen Datenquellen. Bei einer bevorzugten Weiterbildung des erfindungsgemäßen technischen Systems ist eine Einverständnisdatenbank vorgehalten, welche eine oder mehrere Einverständniserklärungen des mindestens einen Datensubjekts enthält. Zweckmäßig ist die zumindest eine Datenquelle/sind die Datenquellen ausgebildet, die Einverständnisdatenbank und/oder die Widerrufsdatenbank abzufragen. Vorzugsweise ist die Einverständnisdatenbank automatisiert, insbesondere computerimplementiert.

In einer bevorzugten Weiterbildung der Erfindung liegen bei dem technischen System die Einverständnisdatenbank und die Widerrufsdatenbank als gemeinsame Datenbank vor. Alternativ und ebenfalls bevorzugt liegen in einer weiteren Weiterbildung der Erfindung die Einverständnisdatenbank und die Widerrufsdatenbank als getrennte Datenbanken vor.

In einer weiteren vorteilhaften Weiterbildung der Erfindung hinterlegt der Betreiber Zugriffskontrollregeln, die die Erfordernis einer oder mehrerer Einverständniserklärungen spezifizieren, direkt bei der zumindest einen Datenquelle/den von der oder den Zugriffskontrollregeln jeweils betroffenen Datenquellen. Soweit nachfolgend vom Erfordernis eines oder mehrerer Einverständnisse/s und/oder Einverständniserklärung/en die Rede ist, ist dieses Erfordernis gleichbedeutend mit einer Zugriffskontrollregel. Bei dem technischen System gemäß der Erfindung liegt in einer bevorzugten Weiterbildung eine Zugriffskontrollregel-Datenbank vor, welche eines oder mehrere Erfordernisse eines oder mehrerer Einverständnisse/s und/oder einer oder mehrerer Einverständniserklärungen enthält. In dieser Weiterbildung der Erfindung hält die Zugriffskontrollregel-Datenbank die Erfordernisse für ein gegenwärtig gültiges Einverständnis bereit, sodass die zumindest eine Datenquelle/die Datenquellen von der Zugriffskontrollregel-Datenbank diese Erfordernisse erfragen kann/können und anhand dieser Erfordernisse das jeweilige Einverständnis oder die Einverständnisse entweder aus einer EinverständnisDatenbank und/oder einen jeweiligen Widerruf eines Einverständnisses aus einer Widerrufsdatenbank abfragen kann/können. Vorzugsweise ist die Zugriffskontrollregel-Datenbank automatisiert, insbesondere computerimplementiert. Vorzugsweise ist oder sind die Datenquelle/n ausgebildet, die Zugriffskontrollregel-Datenbank, insbesondere automatisiert, abzufragen.

Insbesondere kann aus der Zugriffskontrollregel-Datenbank ein Einverständnis gruppenweise abgeleitet werden oder aber ein gruppenweise für mehrere Datenquellen erklärtes Einverständnis wird als solches gruppenweise bereitgehalten. Besonders bevorzugt kann bei technischen Systemen, welche insbesondere als Smart-Home-Anwendung ausgebildet sind, ein Datensubjekt ein Einverständnis derart erklären, dass sämtliche Sensoren, etwa Feuchtigkeitssensoren, Daten wie etwa Feuchtigkeitsdaten sammeln und, etwa an ein Lüftungssystem, weitergeben dürfen. Diese Gruppe kann naturgemäß dynamisch Mitglieder hinzugewinnen oder verlieren; jedoch können alle Datensubjekte der Gruppe verifizieren, dass ihnen ein gültiges Einverständnis zugeordnet ist, solange die Datenquellen Daten nutzen.

Bei dem technischen System gemäß der Erfindung umfasst die Nutzung der personenbezogenen Daten zweckmäßig eine Erhebung und/oder Erfassung und/oder eine Speicherung und/oder eine Verarbeitung und/oder eine Weitergabe der personenbezogenen Daten.

Bevorzugt ist bei dem erfindungsgemäßen technischen System ein Betreiber vorhanden, welcher zur Entgegennahme von Einverständniserklärungen und/oder Widerrufen von Einverständniserklärungen mit dem zumindest einen Datensubjekt signalverbunden ist und/oder zur Speisung der Widerrufsdatenbank mit dieser signalverbunden ist und/oder zur Speisung der Einverständnisdatenbank mit dieser signalverbunden ist und/oder zur Hinterlegung des jeweiligen Einverständnisses mit der oder den Datenquelle/n signalverbunden ist und/oder zur Hinterlegung eines Erfordernisses eines oder mehrerer Einverständnisse/s oder einer oder mehrerer Einverständniserklärung/en in der Zugriffskontrollregel-Datenbank mit dieser signalverbunden ist und/oder zur Hinterlegung eines Erfordernisses eines oder mehrerer Einverständnisse/s oder einer oder mehrerer Einverständniserklärung/en mit der oder den Datenquelle/n signalverbunden ist.

Der Betreiber kann grundsätzlich automatisiert sein und zur Entgegennahme von Einverständniserklärungen und/oder Widerrufen von Einverständniserklärungen und/oder zur Speisung der Widerrufsdatenbank und/oder zur Speisung der Einverständnisdatenbank und/oder zur Speisung der Zugriffskontrollregel-Datenbank und/oder zur Hinterlegung von Einverständniserklärungen und/oder Zugriffskontrollregeln in Datenquellen ausgebildet sein.

Vorzugsweise ist oder sind bei dem technisches System gemäß der Erfindung die Datenquelle zur Regelabfrage mit der Zugriffskontrollregel-Datenbank und/oder zum Einverständniserklärungsabruf, d.h. zum Abruf von Einverständniserklärungen, mit der Einverständnisdatenbank und/oder zum Widerrufsabruf, d.h. zum Abruf von Widerrufen, mit der Widerrufsdatenbank und/oder zum Abruf von Zugriffskontrollregeln mit der Zugriffskontrollregel-Datenbank und/oder zum Empfang von Einverständniserklärungen und/oder Zugriffskontrollregeln mit dem Betreiber signalverbunden.

Das erfindungsgemäße technische System bildet bevorzugt zumindest einen Teil eines Internets der Dinge und/oder bei dem erfindungsgemäßen technischen System sind die Datenquellen Sensoren, insbesondere Luftfeuchtigkeitssensoren. Gerade bei einem Internet der Dinge ist das Buchhalten des Vorliegens von Einverständniserklärungen und möglichen Widerrufen aufgrund der Vielzahl von möglichen Datenquellen und beteiligten Datensubjekten besonders relevant.

Das erfindungsgemäße Verfahren zum Betrieb von Datenquellen ist ausgebildet zum Schutz personenbezogener Daten. Bei dem erfindungsgemäßen Verfahren werden die Datenquellen als Teil eines technischen Systems wie zuvor beschrieben betrieben. D.h. die Datenquellen werden in ein technisches System mit einer Widerrufsdatenbank und vorzugsweise auch mit einer Einverständnisdatenbank und/oder mit einer Zugriffskontrollregel-Datenbank eingebunden.

Idealerweise ist oder sind bei dem technischen System oder dem Verfahren gemäß der Erfindung die Widerrufsdatenbank mittels analoger Nutzung eines PKI-Protokolls, insbesondere mittels des CRL-Protokolls und/oder des OCSP-Protokolls realisiert. Idealerweise ist oder sind bei dem technischen System oder dem Verfahren gemäß der Erfindung die Einverständniserklärungen in Analogie zu einem PKI-Zertifikatsformat, insbesondere dem X.509-Zertifikatsformat realisiert. Idealerweise ist oder sind bei dem technischen System oder dem Verfahren gemäß der Erfindung die Zugriffskontrollregel-Datenbank und dort abgelegten Regeln gemäß dem XACML-Standard realisiert.

In dieser Weiterbildung der Erfindung kann somit in Analogie auf die bereits bestehenden Verfahren eines PKI-Protokolls, also einer Public-Key-Infrastruktur, zurückgegriffen werden, zu welcher umfangreiche Praxiserfahrungen sowie etablierte und standardisierte Protokolle und Implementierungen vorliegen.

Idealerweise wird oder werden bei dem erfindungsgemäßen technischen System und bei dem erfindungsgemäßen Verfahren ein oder mehrere Protokoll/e analog eingesetzt, welche/s aus der Verwaltung öffentlicher kryptographischer Zertifikate oder Schlüssel, also PKI-Systemen (PKI = (engl.) *"Public Key Infrastructure"*) entstammt/-en.

In einem PKI-System werden regelmäßig kryptographische Zertifikate ausgestellt, die im Bedarfsfalle gesperrt oder widerrufen werden können. Eine Sperrung oder ein Widerruf kann erforderlich werden, wenn etwa der zugehörige Schlüssel nicht mehr sicher ist, weil er gestohlen oder gebrochen wurde oder wenn der private Schlüssel verloren oder beschädigt worden ist. In solchen Bedarfsfällen kann oder muss das Zertifikat vorzeitig für ungültig erklärt werden, sodass es nicht weiter herangezogen wird. Ein weiterer Grund kann ein nunmehr inkorrekter Zertifikatsinhalt sein, etwa im Fall einer Namensänderung. Auch könnte etwa ein Mitarbeiter eine Abteilung oder gar das Unternehmen verlassen und somit verbundene Privilegien verlieren, welche einen vorzeitigen Zertifikatswiderruf erforderlich machen. Eine Sperre ist aufhebbar (z. B. bei unbestätigtem Verdacht auf Schlüssel-Kompromittierung), ein Widerruf hingegen ist endgültig. Vertrauensnehmer, d.h. Nutzer des jeweils öffentlichen Zertifikats, müssen sich vor der Nutzung des Zertifikats vergewissern, ob es widerrufen worden ist. Um zu überprüfen, ob die Zertifikate, die zur Prüfung der Signatur, zur Identifizierung der Kommunikationspartner oder zur Verschlüsselung verwendet werden, bereits vor Ende ihres regulären Gültigkeitszeitraums ungültig wurden, wird zweckmäßig zumindest einer der zwei Standards CRL und OCSP herangezogen:
Mit OCSP und CRL existieren bei der Handhabung von Zertifikaten in einer PKI bekannte, erprobte und einsatzreife Protokolle zur Umsetzung von Widerrufen von Erklärungen, welche sich analog auf Einverständniserklärungen zur Nutzung personenbezogener Daten anwenden lassen (etwa als OCSP = engl. *"Online Consent Status Protocol"* und CRL = engl. *"Consent Revocation List"*), wenn man die Erteilung einer Einverständniserklärung in Analogie zur Ausstellung eines PKI-Zertifikats setzt.

Eine Zertifikatsperrliste ((engl.) *"Certificate Revocation* List", CRL, RFC 5280) ist eine Widerrufsdatenbank für Zertifikate, d.h. eine Liste mit ungültigen Zertifikaten. Sie ermöglicht es, festzustellen, ob ein Zertifikat nur temporär gesperrt oder widerrufen wurde und warum. Erklärt eine Zertifizierungsstelle ((engl.) *"Certificate Authority",* CA) ein Zertifikat für ungültig, tragt es die Seriennummer dieses Zertifikats in die CRL ein. Die CRL enthält einen Zeitstempel und einen Gültigkeitszeitraum. Sie ist durch eine digitale Signatur gesichert. Eine zertifikatsnutzende Komponente kann etwa eingerichtet sein, eine aktuelle Fassung dieser Liste von der ausstellenden CA herunterzuladen. Diese kann sie dann offline effizient auswerten.

Das OCSP-Protokoll ((engl.) *"Online Certificate Status Protocol",* OCSP RFC 6960) ist ein Netzwerkprotokoll, mittels welchem der Status von einzelnen X.509-Zertifikaten online bei einem Validierungsdienst abgefragt werden kann.

Im Bereich des Datenschutzes lässt sich eine Erteilung einer Einverständniserklärung eines Datensubjekts mit der Ausstellung eines Zertifikates durch eine Zertifizierungsstelle vergleichen und dementsprechend mittels analoger Nutzung derselben Protokolle realisieren. Wenn das Datensubjekt sein Einverständnis erklärt, lässt sich dieser Vorgang dokumentieren. Der Betreiber kann die Einverständniserklärung, also vergleichbar der Ausstellung eines Zertifikates wie X.509, in seinem System hinterlegen.

Soweit in der vorliegenden Anmeldung von *"analoger"* Nutzung eines Protokolls oder eines Standards aus dem PKI-Umfeld die Rede ist, ist insbesondere zu verstehen, dass sich die Nutzung gerade darin von der Nutzung des Protokolls oder Standards unterscheidet, dass an die Stelle des PKI-Zertifikats die Einverständniserklärung des Datensubjekts im Sinne der vorliegenden Anmeldung tritt:
Ein PKI-Zertifikat wie X.509 umfasst regelmäßig einen kryptographischen öffentlichen Schlüssel sowie - zumindest im Falle der E-Mail-Verschlüsselung - eine zugeordnete E-Mail-Adresse und weitere Informationen, wie etwa die Gültigkeit des öffentlichen Schlüssels. Die Einverständniserklärung hingegen beinhaltet neben einer konkreten Bezeichnung, zweckmäßig dem Namen, des Datensubjekts zusätzlich den Umfang der gegebenen Einverständniserklärung, insbesondere eine sachliche Begrenzung auf diejenigen Daten, die genutzt werden dürfen, und/oder eine zeitliche Befristung der Einverständniserklärung.

So lässt sich eine Abgabe der Einverständniserklärung eines Datensubjekts zweckmäßigerweise analog zu einer Ausstellung eines PKI-Zertifikats durch den Betreiber realisieren. Im Falle der Einverständniserklärung beglaubigt der Betreiber also keinen öffentlichen Schlüssel, sondern er beglaubigt vorliegend einen Sachverhalt, nämlich die Abgabe der Einverständniserklärung.

Der Betreiber agiert bei dem erfindungsgemäßen technischen System folglich vorzugsweise analog einem Zertifikataussteller, d.h. analog einer Certificate Authority. Der Betreiber kann die Einverständniserklärung/en an die zumindest eine Datenquelle/n übermitteln, indem der Betreiber die Einverständniserklärungen an die Datenquelle/n übermittelt. Zweckmäßig sind die Einverständniserklärungen vom Betreiber signiert.

Der Widerruf der Einverständniserklärung/en kann analog zu einem Widerruf eines PKI-Zertifikats erfolgen: So kann eine Widerrufsdatenbank formal gemäß dem CRL-Protokoll ausgebildet sein und/oder die Einverständnisdatenbank kann formal gemäß dem OCSP-Protokoll ausgebildet sein, denn für das CRL-Protokoll und für das OCSP-Protokoll als solche kommt es auf die Bedeutung des jeweiligen Zertifikats selbst (also auf die Tatsache, ob es sich um ein PKI-Zertifikat oder wie im Falle der vorliegenden Erfindung um eine Einverständniserklärung handelt) nicht eigens an.

Geeigneterweise ist dazu die Einverständniserklärung analog einem PKI-Zertifikat mit einer Seriennummer versehen. Anhand dieser Seriennummer wird in einer vorteilhaften Ausgestaltung bei einer Abfrage der Einverständnisdatenbank die Einverständniserklärung referenziert und/oder ein Widerruf der Einverständniserklärung der Einverständniserklärung zugeordnet.

Zweckmäßig wird die oben erwähnte Seriennummer bei einem OCSP-Request referenziert und/oder in einer CRL-Liste gesucht. Es versteht sich, dass anstelle einer Seriennummer auch eine andere eindeutige Kennzeichnung Verwendung finden kann.

Wenn eine der Datenquellen im System personenbezogene Daten generiert, erhebt, weitergibt, speichert oder verarbeitet, ist diese idealerweise eingerichtet, sich immer erst zu vergewissern, dass je Datensubjekt eine gültige Einverständniserklärung dieses Datensubjekts vorliegt und diese noch nicht widerrufen wurde. Hierbei können zweckmäßig die oben beschriebenen Protokolle und Verfahren in Anwendung oder Analogie zu CRL und OCSP zum Einsatz kommen. Diese Protokolle beinhalten insbesondere, dass sich die Datenquellen die Widerrufsinformation aktiv aus der Widerrufsdatenbank beschaffen.

Nachfolgend wird die Erfindung anhand eines anhand der Zeichnung dargestellten Ausführungsbeispiels näher erläutert.

Es zeigen:
- Fig. 1: ein erstes Ausführungsbeispiel des erfindungsgemäßen technischen Systems zur Ausführung eines ersten Ausführungsbeispiels des erfindungsgemäßen Verfahrens schematisch in einer Prinzipskizze sowie
- Fig. 2: ein weiteres Ausführungsbeispiel des erfindungsgemäßen technischen Systems zur Ausführung eines weiteren Ausführungsbeispiels des erfindungsgemäßen Verfahrens schematisch in einer Prinzipskizze.

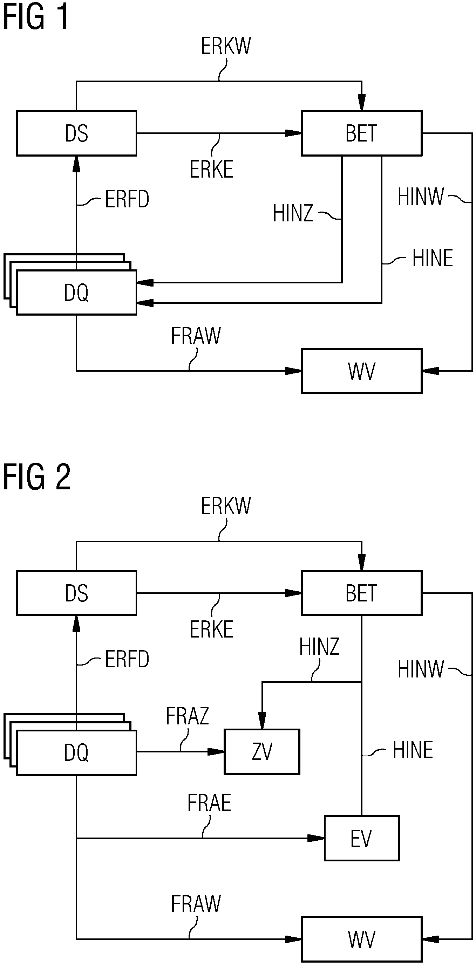

Das in Fig. 1 dargestellte erfindungsgemäße technische System ist eine Smart-Home-Steuerung und umfasst eine nicht in Fig. 1 dargestellte Lüftungsanlage. Zur Steuerung der Lüftungsanlage werden Daten in Form von Luftfeuchtigkeitsdaten herangezogen, welche mittels Datenquellen DQ des technischen Systems in Form von Luftfeuchtigkeitssensoren gewonnen werden. Zur Erhebung ERFD und Verarbeitung und Weitergabe der Daten dieser Datenquellen DQ ist das Einverständnis der Datensubjekte DS, im gezeigten Ausführungsbeispiel natürlicher Personen, erforderlich. Das Erfordernis dieser Einverständniserklärungen hinterlegt der Betreiber bei den betroffenen Datenquellen in Form von Zugriffskontrollregeln mittels einer Mitteilung HINZ dieser Zugriffskontrollregeln. Folglich können die Datenquellen DQ nur solange Daten an die Lüftungsanlage liefern, wie die Datensubjekte DS einverstanden sind. Solange kein Einverständnis der Datensubjekte DS vorliegt, werden keine Daten mittels der Datenquellen DQ erfasst und auch keine Daten weitergegeben.

Wenn die Datensubjekte DS dem Betreiber BET des technischen Systems ihr Einverständnis zur Erfassung, Verarbeitung und Weitergabe ihrer Daten mittels einer Einverständniserklärung ERKE erklären, so wird diese Einverständniserklärung ERKE beim Betreiber BET des technischen Systems, beispielsweise mittels eines Zertifikats des Betreibers BET signiert. Die hinterlegten Einverständniserklärungen ERKE werden den Datenquellen DQ mittels der Mitteilung HINE übermittelt, die zusätzlich zum Einverständnis auch eine Information darüber enthält, wo Widerrufe oder Sperren der Einverständniserklärungen ERKE abgerufen werden können.

Wenn den Datenquellen DQ sämtliche gemäß der hinterlegten Zugriffskontrollregeln erforderlichen Einverständniserklärungen ERKE mittels der Mitteilung HINE übermittelt worden sind, so können die Datenquellen DQ mit der Erhebung ERFD, Erfassung und Speicherung und Weitergabe beginnen.

In dem Falle, dass eines der Datensubjekte DS seine Einverständniserklärung ERKE mittels einer Widerrufserklärung ERKW an den Betreiber BET temporär oder dauerhaft widerruft, so muss diese Widerrufserklärung ERKW bekannt gemacht werden. Dazu übermittelt der Betreiber BET die Widerrufserklärungen ERKW mittels einer Mitteilung HINW von Widerrufserklärungen an eine Widerrufsdatenbank WV. Die Widerrufsdatenbank WV wird beispielsweise auf einem Server bereitgestellt, auf welchem die Datenquellen die sie betreffenden Einträge mittels der Widerrufsabfrage FRAW abfragen können. Im gezeigten Ausführungsbeispiel sind die Widerrufe analog in der Art des CRL-Protokolls und/oder des OCSP-Protokolls abrufbar. Mittels der Widerrufsabfrage FRAW erhalten die Datenquellen DQ die Information über das Vorliegen der Widerrufserklärung ERKW, sodass sie eine weitere Erfassung, Verarbeitung und Weitergabe der Daten an die Lüftungsanlage unterlassen, je nach Sachlage bis entweder die Dauer der Widerrufserklärung ausläuft oder aber bis das betreffende Datensubjekt DS erneut eine Einverständniserklärung ERKE abgibt.

Die Datenquellen DQ sind dazu so konfiguriert, dass sie zur Erfassung oder Verarbeitung oder Weitergabe von persönlichen Daten das Vorhandensein von gemäß der hinterlegten Zugriffskontrollregeln aktuell gültigen Einverständniserklärungen ERKE voraussetzen. Sobald der Betreiber BET eine solche Einverständniserklärung ERKE erhält, teilt er der Datenquelle DQ das nunmehrige Vorhandensein einer solchen Einverständniserklärung (identifiziert beispielsweise durch eine ID, sowie charakterisiert durch Datensubjekt DS und Verwendungszweck der genutzten Daten) mittels einer Mitteilung HINE mit und teilt der Datenquelle DQ darüber hinaus mit, wo eine Information über eine eventuelle Widerrufserklärung ERKW hinterlegt werden wird.

Das in Figur 2 dargestellte zweite Ausführungsbeispiel des erfindungsgemäßen technischen Systems ist gegenüber dem in Fig. 1 dargestellten technischen System erweitert. Dabei ist das technische System hinsichtlich seiner übrigen Eigenschaften, soweit sie nachfolgend nicht angesprochen sind, identisch zum in Fig. 1 dargestellten technischen System.

Im Unterschied zum in Fig. 1 dargestellten technischen System wird den Datenquellen DQ das jeweils vorliegende Einverständnis zur Nutzung datensubjektbezogener Daten nicht direkt durch den Betreiber BET mitgeteilt, sondern der Betreiber BET hält eine Einverständnisdatenbank EV bereit, in welche der Betreiber BET sämtliche erhaltenen Einverständniserklärungen ERKE der Datensubjekte DS mittels der Mitteilung HINE hinterlegt. Die mittels der Mitteilung HINE hinterlegten Einverständniserklärungen ERKE können von den Datenquellen DQ mittels eines Abrufs FRAE abgerufen werden. Die Datenquellen DQ beschaffen sich dazu zunächst die jeweils erforderlichen Maßgaben in Form von Zugriffskontrollregeln, zu welcher Art von Nutzung jeweils ein Einverständnis von welchen Datensubjekten DS erforderlich ist. Diese Maßgaben sind vom Betreiber BET des technischen Systems mittels der Mitteilung von Zugriffskontrollregeln HINZ in einer Zugriffskontrollregel-Datenbank ZV eingetragen, in welcher die Zugriffskontrollregeln mittels der Mitteilung HINZ hinterlegt sind. Die Datenquellen DQ sind eingerichtet, sich die Zugriffskontrollregeln aus der Zugriffskontrollregel-Datenbank ZV mittels Anfragen FRAZ zu beschaffen. Entsprechend der Zugriffskontrollregeln der Zugriffskontrollregel-Datenbank ZV rufen die Datenquellen DQ das Vorliegen des entsprechenden Einverständnisses aus der Einverständnisdatenbank EV mittels der Abrufe FRAE ab. Dies vermeidet die Notwendigkeit einer schlecht skalierenden direkten Einzelkonfiguration von Datenquellen DQ.

Soweit das Datensubjekt mittels einer Widerrufserklärung ERKW seine Einverständniserklärung ERKE widerruft, veröffentlicht der Betreiber BET das Vorliegen der Widerrufserklärung ERKW in der Widerrufsdatenbank WV. Daraufhin werden nach erfolgtem Abruf dieser Widerrufserklärung FRAW wie in Beispiel 1 die Datenquellen DQ die weitere Erfassung, Nutzung und Weitergabe der datensubjektbezogenen Daten einstellen.

Im in Figur 2 dargestellten Ausführungsbeispiel ist die Widerrufsdatenbank WV mittels analoger Nutzung eines Protokolls zum Abruf einer Certificate Revocation List (CRL) eines PKI-Verfahrens oder auch mittels analoger Nutzung eines Online Certificate Status Protocols (OCSP), ebenfalls eines PKI-Verfahrens, realisiert.

Damit können die Datenquellen DQ offline oder online mittels Abfragen der Widerrufsdatenbank WV prüfen, dass sämtliche erforderlichen Einverständniserklärungen ERKE noch gültig sind, wenn die weitere Nutzung oder Weitergabe von datensubjektbezogenen Daten ansteht. Beispielsweise sind die Datenquellen DQ eingerichtet, solche Abfragen an die Widerrufsdatenbank WV in vordefinierten und/oder hinreichend kurzen, etwa regelmäßigen, Abständen zu unternehmen, um eine Unterlassung der Datenerfassung so zeitnah wie möglich umzusetzen. Die aus dem PKI-Umfeld wohlbekannten Protokolle CRL und OCSP lassen sich dabei analog einsetzen.

Beispielsweise ist die Zugriffskontrollregeldatenbank ZV und das zugehörige Zugriffskontrollsystem gemäß XACML (OASIS) gegliedert und enthält Zugriffskontrollregeln konform zu diesem Standard. Beispielsweise kann seitens des Betreibers BET etwa das Erfordernis einer Einverständniserklärung ERKE als Regel in einer Zugriffskontrollregel-Datenbank ZV in der Art eines Zugriffskontrollregel-Archivs (engl. = *"access control policy repository"*) hinterlegt sein, welche die Datenquelle DQ abfragen kann.

Eine Einverständnisdatenbank EV, in welcher die Erteilung einer solchen Einverständniserklärung ERKE (vergleichbar dem Ausstellen und Publizieren des Zertifikates in einer PKI) bekannt gemacht wird, kann als Zugriffskontrollregel-Informationspunkt (engl. = *"policy information point",* PIP) gemäß XACML aufgefasst werden. Von dieser Einverständniserklärungsdatenbank EV kann sich die Datenquelle DQ die erteilte Einverständniserklärung ERKE beschaffen. Sollten der Betreiber BET und die Datenquelle DQ ein XACML-konformes Zugriffskontrollsystem ZV nutzen, wäre in dieser Nomenklatur die Widerrufserklärungsdatenbank WV (in Analogie zu PKI-Systemen also der "CRL"-Server bzw. der "OCSP"-Responder) aus Sicht von Datenquelle oder -prozessor ebenfalls ein Zugriffskontrollregel-Informationspunkt (PIP).

Zur Realisierung des erfindungsgemäßen technischen Systems existieren folglich standardisierte Protokolle und Vorgehensweisen, welche sich einfach und effizient analog für den vorliegenden Anwendungskontext (also für die Erklärung und den Widerruf von Einverständnissen) heranziehen lassen. Vorteilhaft ist die Lösung recht allgemein und muss somit nicht für jeden einzelnen Anwendungsfall neu personalisiert werden.

Der Betreiber BET kann in den vorgenannten Ausführungsbeispielen grundsätzlich automatisiert sein, etwa computerimplementiert und softwarebasiert sein, und zur Entgegennahme von Einverständniserklärungen und/oder Widerrufen von Einverständniserklärungen und/oder zur Speisung der Widerrufsdatenbank und/oder zur Speisung der Einverständnisdatenbank ausgebildet sein.

Die vorgenannten Ausführungsbeispiele lassen sich auf weitere technische Systeme, insbesondere im Bereich des Internets der Dinge, übertragen.

## Patentansprüche

1. Technisches System, ausgebildet zum Schutz personenbezogener Daten, bei welchem das technische System eine oder mehrere Datenquellen (DQ) aufweist, welche zur Nutzung personenbezogener Daten mindestens eines Datensubjekts (DS) ausgebildet sind, wobei eine Widerrufsdatenbank (WV) bereitgehalten ist, welche eine oder mehrere Widerruf/e zu einem oder mehreren Einverständniserklärungen (ERKE) des mindestens einen Datensubjekts (DS) bereithält.

2. Technisches System nach dem vorhergehenden Anspruch, bei welchem eine Einverständniserklärungsdatenbank (EV) vorgehalten ist, welche eine oder mehrere Einverständniserklärungen (ERKE) des mindestens einen Datensubjekts (DS) enthält.

3. Technisches System nach einem der vorhergehenden Ansprüche, bei welchem die Einverständnisdatenbank (EV) und die Widerrufsdatenbank (WV) als gemeinsame oder als getrennte Datenbanken vorliegen.

4. Technisches System nach einem der vorhergehenden Ansprüche, bei welchem eine Zugriffskontrollregel-Datenbank (ZV) vorliegt, welche eines oder mehrere Erfordernisse eines oder mehrerer Einverständnisse/s oder eine oder mehrere Einverständniserklärung/en (ERKE) enthält.

5. Technisches System nach einem der vorhergehenden Ansprüche, bei welchem die Nutzung eine Erhebung und/oder eine Speicherung und/oder eine Verarbeitung und/oder eine Weitergabe der personenbezogenen Daten umfasst.

6. Technisches System nach einem der vorhergehenden Ansprüche, bei welchem ein Betreiber (BET) vorhanden ist, welcher zur Entgegennahme von Einverständniserklärungen (ERKE) und/oder Widerrufen von Einverständniserklärungen (ERKE) mit dem zumindest einen Datensubjekt (DS) signalverbunden ist und/oder zur Speisung der Widerrufsdatenbank (WV) mit dieser signalverbunden ist und/oder zur Speisung der Einverständnisdatenbank (EV) mit dieser verbunden ist und/oder zur Hinterlegung des Einverständnisses mit dem oder den Datenquellen (DQ) signalverbunden ist und/oder zur Hinterlegung eines Erfordernisses eines oder mehrerer Einverständnisse/s oder einer oder mehrerer Einverständniserklärung/en (ERKE) in der Zugriffskontrollregel-Datenbank (ZV) signalverbunden ist und/oder zur Hinterlegung eines Erfordernisses eines oder mehrerer Einverständnisse/s oder einer oder mehrerer Einverständniserklärung/en (ERKE) mit der oder den Datenquellen (DQ) signalverbunden ist.

7. Technisches System nach einem der vorhergehenden Ansprüche, bei welchem die Datenquelle (DQ) zur Regelabfrage mit der Zugriffskontrollregel-Datenbank (ZV) und/oder zum Einverständniserklärungsabruf mit der Einverständnisdatenbank (EV) und/der zum Widerrufsabruf mit der Widerrufsdatenbank (WV) und/oder zum Empfang von Einverständniserklärungen und/oder Zugriffskontrollregeln mit dem Betreiber (BET) signalverbunden ist.

8. Technisches System nach einem der vorhergehenden Ansprüche, welches zumindest einen Teil eines Internets der Dinge bildet und/oder bei welchem die Datenquellen (DQ) Sensoren, insbesondere Luftfeuchtigkeitssensoren, sind.

9. Verfahren zum Betrieb von Datenquellen (DQ), ausgebildet zum Schutz personenbezogener Daten, bei welchem die Datenquellen (DQ) als Teil eines technischen Systems nach einem der vorhergehenden Ansprüche betrieben werden.

10. Technisches System oder Verfahren nach einem der vorhergehenden Ansprüche, bei welchem die Abfrage der Widerrufsdatenbank (WV) mittels der, zumindest analogen, Nutzung eines PKI-Protokolls, insbesondere mittels der, zumindest analogen, Nutzung des CRL-Protokolls und/oder des OCSP-Protokolls, realisiert ist.

11. Technisches System oder Verfahren nach einem der vorhergehenden Ansprüche, bei welchem die Einverständnisdatenbank (EV) Einverständniserklärungen (ERKE) in einem Format analog einem PKI-Zertifikat, insbesondere analog einem X.509-Zertifikat, enthält, welche validierbar sind.

12. Technisches System oder Verfahren nach einem der vorhergehenden Ansprüche, bei welchem Zugriffskontrollregeln gemäß XACML formuliert sind und/oder in dem die Zugriffskontrollregel-Datenbank (ZV) Zugriffskontrollregeln, die gemäß XACML formuliert sind, enthält und/oder in dem die Zugriffskontrollregel-Datenbank gemäß XACML ausgebildet ist.

## Geänderte Patentansprüche

### Geänderte Patentansprüche gemäss Regel 137(2) EPÜ.

1. Technisches System, ausgebildet als Smart Home Anwendung zum Schutz personenbezogener Daten, bei welchem das technische System eine oder mehrere Datenquellen (DQ) aufweist, welche zur Nutzung personenbezogener Sensordaten im Bereich das Internets der Dinge (IoT) mindestens eines Datensubjekts (DS) ausgebildet sind, wobei eine Widerrufsdatenbank (WV) bereitgehalten ist, welche eine oder mehrere Widerruf/e zu einem oder mehreren Einverständniserklärungen (ERKE) des mindestens einen Datensubjekts (DS) bereithält und bei welchem die Datenquellen (DQ) Sensoren sind, wobei bei dem technischen System eine Einverständniserklärungsdatenbank (EV) vorgehalten ist, welche eine oder mehrere Einverständniserklärungen (ERKE) des mindestens einen Datensubjekts (DS) enthält und wobei das technische System derart ausgeführt ist, dass die Datenquellen (DQ) nur solange Daten liefern, wie die Datensubjekte (DS) einverstanden sind und bei Vorliegen einer Widerrufserklärung (ERKW) eine weitere Erfassung, Verarbeitung und Weitergabe der Daten unterlassen wird

2. Technisches System nach Anspruch 1, bei welchem die Einverständnisdatenbank (EV) und die Widerrufsdatenbank (WV) als gemeinsame oder als getrennte Datenbanken vorliegen.

3. Technisches System nach einem der vorhergehenden Ansprüche, bei welchem eine Zugriffskontrollregel-Datenbank (ZV) vorliegt, welche eines oder mehrere Erfordernisse eines oder mehrerer Einverständnisse/s oder eine oder mehrere Einverständniserklärung/en (ERKE) enthält.

4. Technisches System nach einem der vorhergehenden Ansprüche, bei welchem die Nutzung eine Erhebung oder eine Speicherung oder eine Verarbeitung oder eine Weitergabe der personenbezogenen Daten umfasst.

5. Technisches System nach einem der vorhergehenden Ansprüche, bei welchem ein Betreiber (BET) vorhanden ist, welcher zur Entgegennahme von Einverständniserklärungen (ERKE) und Widerrufen von Einverständniserklärungen (ERKE) mit dem zumindest einen Datensubjekt (DS) signalverbunden ist und zur Speisung der Widerrufsdatenbank (WV) mit dieser signalverbunden ist und zur Speisung der Einverständnisdatenbank (EV) mit dieser verbunden ist und zur Hinterlegung des Einverständnisses mit dem oder den Datenquellen (DQ) signalverbunden ist und zur Hinterlegung eines Erfordernisses eines oder mehrerer Einverständnisse/s oder einer oder mehrerer Einverständniserklärung/en (ERKE) in der Zugriffskontrollregel-Datenbank (ZV) signalverbunden ist und zur Hinterlegung eines Erfordernisses eines oder mehrerer Einverständnisse/s oder einer oder mehrerer Einverständniserklärung/en (ERKE) mit der oder den Datenquellen (DQ) signalverbunden ist.

6. Technisches System nach einem der vorhergehenden Ansprüche, bei welchem die Datenquelle (DQ) zur Regelabfrage mit der Zugriffskontrollregel-Datenbank (ZV) und zum Einverständniserklärungsabruf mit der Einverständnisdatenbank (EV) und zum Widerrufsabruf mit der Widerrufsdatenbank (WV) und zum Empfang von Einverständniserklärungen oder Zugriffskontrollregeln mit dem Betreiber (BET) signalverbunden ist.

7. Technisches System nach einem der vorhergehenden Ansprüche, bei welchem die Datenquellen (DQ) Luftfeuchtigkeitssensoren sind.

8. Verfahren zum Betrieb von Datenquellen (DQ), ausgebildet zum Schutz personenbezogener Daten, bei welchem die Datenquellen (DQ) als Teil eines technischen Systems nach einem der vorhergehenden Ansprüche betrieben werden.

9. Technisches System oder Verfahren nach einem der vorhergehenden Ansprüche, bei welchem die Abfrage der Widerrufsdatenbank (WV) mittels der, zumindest analogen, Nutzung eines PKI-Protokolls, und zwar mittels der, zumindest analogen, Nutzung des CRL-Protokolls oder des OCSP-Protokolls, realisiert ist.

10. Technisches System oder Verfahren nach einem der vorhergehenden Ansprüche, bei welchem die Einverständnisdatenbank (EV) Einverständniserklärungen (ERKE) in einem Format analog einem PKI-Zertifikat, und zwar analog einem X.509-Zertifikat, enthält, welche validierbar sind.

11. Technisches System oder Verfahren nach einem der vorhergehenden Ansprüche, bei welchem Zugriffskontrollregeln gemäß XACML formuliert sind und/oder in dem die Zugriffskontrollregel-Datenbank (ZV) Zugriffskontrollregeln, die gemäß XACML formuliert sind, enthält oder in dem die Zugriffskontrollregel-Datenbank gemäß XACML ausgebildet ist.
